# FASCICULE DE BREVET EUROPEEN

(11) **EP 3 123 212 B1**
(45) Date de publication et mention de la délivrance du brevet: **24.06.2020**
(21) Numéro de dépôt: 15711530.4
(22) Date de dépôt: 24.03.2015
(51) Int. Cl.: G02B 3/14, G02B 26/00, G02B 26/08

(54) **DISPOSITIF OPTIQUE A MEMBRANE DEFORMABLE**
OPTISCHE VORRICHTUNG MIT EINER DEFORMIERBAREN MEMBRAN
OPTICAL DEVICE WITH A DEFORMABLE MEMBRANE

(30) Priorité: 25.03.2014 FR 1452523
(43) Date de publication de la demande: 01.02.2017
(73) Titulaire: Webster Capital LLC, Wilmington, Delaware 19801 (US)
(72) Inventeur: BOLIS, Sébastien, F-38920 Crolles (FR)
(74) Mandataire: Lang, Johannes
(86) Numéro de dépôt international: PCT/EP2015/056199
(87) Numéro de publication internationale: WO 2015/144669

(56) Documents cités:
- WO-A1-2012/097163
- DE-A1-102007 004 080
- FR-A1- 2 919 073
- FR-A1- 2 923 301
- FR-A1- 2 970 787

## Description

### DOMAINE DE L'INVENTION

La présente invention concerne un dispositif optique à focale variable comprenant une membrane déformable.

### ARRIERE PLAN DE L'INVENTION

Les dispositifs optiques multi-ouvertures, qui comprennent une pluralité de systèmes optiques tels que des lentilles formant un réseau (« array » selon la terminologie anglo-saxonne), sont utilisés dans de nombreux domaines de l'optique et de la photonique. Parmi les exemples d'applications, on peut citer les yeux artificiels, les caméras (par exemple les optiques plenoptiques Lytro ou Pelican Imaging), les systèmes optiques d'imagerie 3D (capture ou projection d'images), ou encore les télécommunications.

Il existe différentes solutions techniques pour faire varier la focale d'un dispositif optique comprenant une pluralité de lentilles.

Une première technique consiste à former une pluralité de lentilles par électromouillage. Le dispositif optique peut être activé en appliquant une différence de potentiel entre plusieurs électrodes (cas traditionnel de l'électromouillage). Une autre solution (sans électrode) consiste à utiliser un substrat de Lithium Niobate comprenant des régions de polarisations inversées réparties selon un motif déterminé et une couche d'huile optique répartie sur la surface dudit substrat. Une variation de température du substrat modifie sa polarisation et conduit à modifier l'épaisseur d'huile selon la polarisation de la région correspondante du substrat [1].

Une autre technique est basée sur la déformation d'une membrane déformable au contact d'un volume constant d'un fluide. Le dispositif optique comprend un circuit fluidique formé d'une pluralité de chambres communiquant entre elles par des canaux, lesdites chambres étant délimitées entre un substrat et une membrane déformable. Chaque chambre constitue ainsi une lentille. Le circuit fluidique est rempli d'un fluide sensiblement incompressible et est connecté à une pompe qui permet de faire varier la pression de fluide l'ensemble des chambres et ainsi de déformer la membrane afin d'ajuster la focale des lentilles [2].

Cependant, un tel dispositif est encombrant, notamment du fait de la présence de la pompe qui est agencée de manière déportée par rapport au réseau de lentilles.

D'autre part, le circuit fluidique, qui est complexe et coûteux à réaliser, pénalise le temps de réponse du dispositif.

### BREVE DESCRIPTION DE L'INVENTION

Un but de l'invention est de remédier aux inconvénients des dispositifs existants et de concevoir un dispositif optique comprenant au moins deux lentilles ou miroirs de conception simple, peu onéreuse, et performant en termes de temps de réponse.

Conformément à l'invention, il est proposé un dispositif optique à focale variable défini par la revendication 1.

Selon un mode de réalisation, la structure de rigidification comprend une pluralité de nervures s'étendant perpendiculairement à la surface de la partie centrale de la membrane, lesdites nervures étant agencées les unes par rapport aux autres de sorte à définir lesdites alvéoles délimitant chacune une région déformable respective.

Selon un autre mode de réalisation, la structure de rigidification comprend une couche s'étendant sur la partie centrale de la membrane, ladite couche présentant au moins deux ouvertures définissant des alvéoles délimitant chacune une région déformable respective.

Lesdites alvéoles présentent de préférence une forme circulaire.

Selon une forme d'exécution, la structure de rigidification fait partie intégrante de la membrane.

De manière alternative, la structure de rigidification est liée à la membrane.

Selon un mode de réalisation, la raideur des régions déformables de la membrane est constante d'une région à l'autre.

Selon un autre mode de réalisation, la membrane comprend au moins deux régions déformables présentant des raideurs différentes.

Selon une forme d'exécution, la structure de rigidification est indéformable sous l'effet d'une variation de la pression de fluide exercée sur la partie centrale de la membrane, de sorte que lorsque le dispositif d'actionnement est activé la partie centrale de la membrane se déplace sans se déformer, seules les régions déformables délimitées par la structure de rigidification étant susceptibles de se déformer.

Selon une autre forme d'exécution, la structure de rigidification est apte à se déformer sous l'effet d'une variation de la pression de fluide exercée sur la partie centrale de la membrane.

Le fond de la cavité opposé à la membrane peut être une paroi du support ou une membrane additionnelle présentant une zone d'ancrage périphérique liée audit support.

L'invention concerne également un procédé de variation de la focale d'un dispositif tel que décrit ci-dessus, comprenant l'application d'une tension électrique d'actionnement au dispositif d'actionnement et la déformation de la membrane dans chaque région déformable délimitée par une alvéole de la structure de rigidification.

### BREVE DESCRIPTION DES DESSINS

D'autres caractéristiques et avantages de l'invention ressortiront de la description détaillée qui va suivre, en référence aux dessins annexés sur lesquels :
- la figure 1 présente un schéma de principe d'un dispositif optique selon un premier mode de réalisation de l'invention au repos en vue de dessus et en coupe,
- la figure 2 est une vue en coupe du dispositif optique de la figure 1 en fonctionnement, dans une forme d'exécution où la structure de rigidification est indéformable sous l'effet d'une variation de la pression de fluide,
- la figure 3 est une vue en coupe du dispositif optique de la figure 1 en fonctionnement, dans une forme d'exécution où la structure de rigidification se déforme sous l'effet d'une variation de la pression de fluide,
- les figures 4A à 4D sont des vues en coupe de différents modes de réalisation du dispositif optique selon l'invention au repos,
- la figure 5 présente un schéma de principe d'un dispositif optique selon un deuxième mode de réalisation de l'invention au repos en vue de dessus et en coupe,
- les figures 6 et 7 illustrent schématiquement des dispositifs de prises de vues de type connu ;
- la figure 8 illustre schématiquement un dispositif de prise de vues comprenant un dispositif optique conforme à l'invention.

### DESCRIPTION DETAILLEE DE L'INVENTION

Le dispositif optique comprend d'une manière générale une cavité remplie d'un volume constant d'un fluide, ladite cavité étant délimitée :
- d'une part, par une membrane déformable liée à un support,
- d'autre part, par un fond opposé à la membrane,
- enfin, par une paroi du support auquel une zone d'ancrage périphérique de la membrane est liée, ladite paroi s'étendant entre le fond et ladite membrane déformable.

La membrane comprend une partie centrale qui définit un champ optique du dispositif optique.

La membrane comprend donc une face, dite face intérieure, qui est en contact avec le fluide, et une face opposée, dite face extérieure, qui est en contact avec un second fluide, qui peut être l'air ambiant.

Par membrane, on entend tout film souple et étanche, de sorte que la membrane forme une barrière entre le fluide contenu dans la cavité et le fluide se situant sur la face opposée de la membrane.

Dans le cas où le dispositif optique est une lentille, qui fonctionne donc en transmission, la membrane et le fond de la cavité sont transparents, au moins dans leur partie centrale, à un faisceau optique destiné à se propager à travers la lentille, en traversant successivement la partie centrale de la membrane, le fluide et le fond de la cavité.

Dans le cas où le dispositif optique est un miroir, la partie centrale de la membrane et/ou du fond est réfléchissante.

Le fluide est suffisamment incompressible pour se déplacer vers la partie centrale du dispositif lorsque l'on applique un effort sur une membrane dans la direction du fluide, cet effort étant appliqué dans une partie intermédiaire entre la zone d'ancrage et la partie centrale de la membrane.

La membrane comprend une structure de rigidification comprenant des alvéoles qui délimitent, dans la partie centrale de la membrane, au moins deux régions déformables.

Chaque région déformable constitue un dioptre d'un système optique élémentaire qui comprend ladite portion de membrane, le fluide, et le fond de la cavité qui constitue un second dioptre. Comme expliqué plus bas, le fond de la cavité peut être une paroi du support - par conséquent indéformable - ou une autre membrane déformable. Suivant les propriétés de la membrane et du fond, ledit système optique élémentaire peut être une lentille (système fonctionnant en transmission) ou un miroir (système fonctionnant en réflexion, l'un des dioptres étant réfléchissant).

La fonction de la structure de rigidification est d'une part de délimiter au sein de la membrane les positions et les ouvertures des systèmes optiques élémentaires grâce aux alvéoles et d'autre part de définir le comportement mécanique de la membrane (notamment sa raideur) dans les régions de la partie centrale de la membrane s'étendant entre lesdits systèmes optiques élémentaires.

Selon un mode de réalisation, la structure de rigidification peut comprendre une pluralité de nervures qui s'étendent perpendiculairement à la surface de la membrane.

De manière alternative, la structure de rigidification peut comprendre une couche s'étendant sur la partie centrale de la membrane et présentant des ouvertures délimitant au moins deux régions déformables de la membrane.

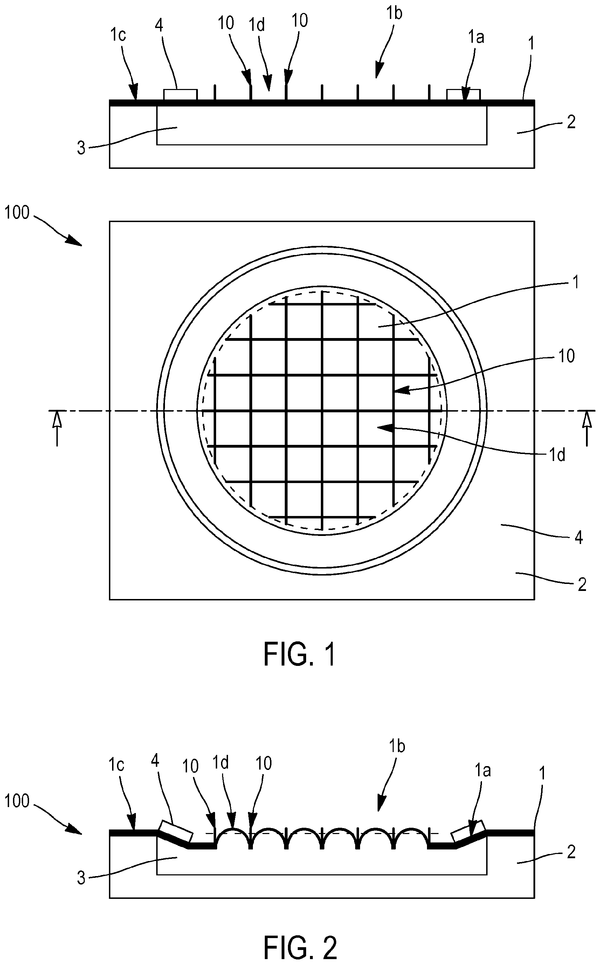

L'utilisation d'une structure de rigidification sous forme de nervures est particulièrement préférée pour réaliser un grand nombre de systèmes optiques élémentaires dans la partie centrale de la membrane. La faible épaisseur des nervures permet en effet de maximiser le nombre de régions déformables distinctes dans la partie centrale de la membrane (cf. figure 1).

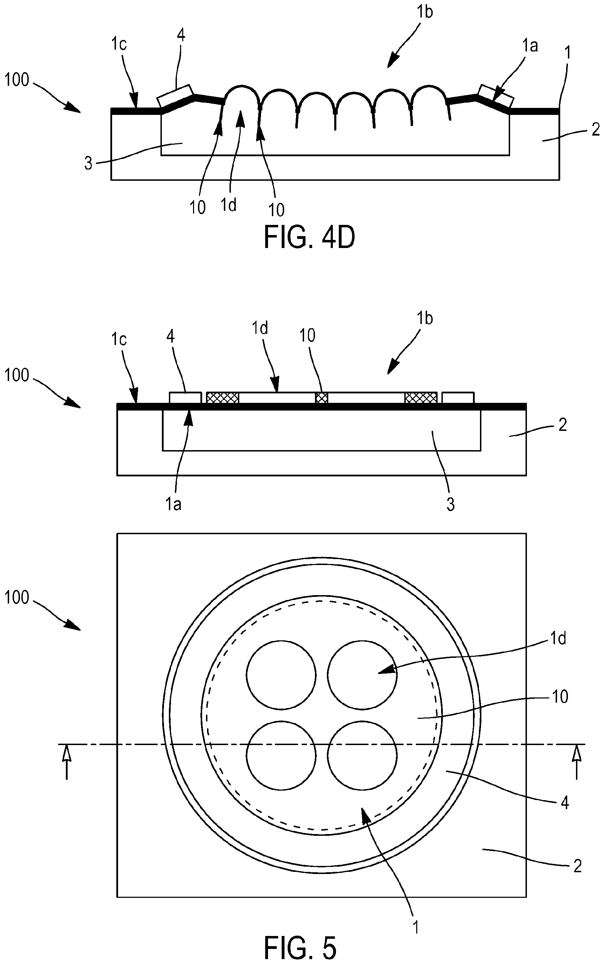

Inversement, l'utilisation d'une structure de rigidification sous forme de couche est préférée pour la réalisation d'un petit nombre de systèmes optiques élémentaires (par exemple 4 dans l'exemple illustré sur la figure 5).

Ainsi, la structure de rigidification est agencée de sorte à former des alvéoles, la portion de membrane située à l'intérieur de chaque alvéole étant déformable. Lesdites alvéoles traversent la structure de rigidification de sorte à exposer chaque portion de membrane respective.

Chaque portion de membrane située à l'intérieur d'une alvéole est apte à se déformer de manière réversible, depuis une position de repos (qui peut être plane ou non), sous l'action d'un tel déplacement du fluide, qui fait varier l'épaisseur de fluide se trouvant au niveau de la partie centrale de chaque membrane. Lesdites portions peuvent présenter une raideur identique d'une région de la membrane à l'autre ou au contraire présenter une raideur différente, ladite raideur pouvant notamment être ajustée par un changement local d'épaisseur ou de matériau de la membrane.

La structure de rigidification peut elle-même être déformable sous l'effet d'une variation de la pression de fluide, auquel cas une telle variation de pression entraîne à la fois :
- une déformation de la structure de rigidification entraînant une déformation globale de la membrane (l'amplitude de cette déformation dépendant de la raideur de la structure de rigidification), et
- une déformation de chaque région de la membrane située à l'intérieur des alvéoles.

De manière alternative, la structure de rigidification est suffisamment rigide pour être sensiblement indéformable sous l'effet d'une variation de la pression de fluide, auquel cas une telle variation de pression ne déforme pas la membrane de manière globale mais déforme uniquement les régions de la membrane situées dans les alvéoles.

La forme du support et de la membrane peut présenter avantageusement une forme de révolution autour de l'axe optique du dispositif optique, mais l'homme du métier pourra choisir toute autre forme sans pour autant sortir de la portée de la présente invention.

La membrane est munie d'un dispositif d'actionnement d'une zone située entre la zone d'ancrage périphérique et la partie centrale.

Ledit dispositif d'actionnement est configuré pour fléchir par application d'une tension électrique d'actionnement de sorte à déplacer une partie du volume de fluide située dans une région située entre la zone d'actionnement de la membrane et le fond de la cavité.

L'homme du métier connaît différents dispositifs d'actionnement utilisables pour actionner des membranes.

Ces dispositifs reposent sur différentes technologies, parmi lesquelles on peut citer l'actionnement piézoélectrique, l'actionnement électrostatique, électromagnétique, thermique ou encore à base de polymères électro-actifs.

On pourra à cet égard se référer à une description détaillée de tels dispositifs d'actionnement dans les documents FR2919073, FR2950154 et FR2950153.

Le choix de la technologie d'actionnement et le dimensionnement du dispositif d'actionnement dépend des performances attendues (par exemple la consommation électrique), des contraintes auxquelles il sera soumis pendant le fonctionnement du dispositif, ainsi que des considérations relatives à la tension électrique d'actionnement à appliquer.

Par exemple, un dispositif d'actionnement particulièrement efficace repose sur la technologie piézoélectrique.

On rappelle qu'un actionneur piézoélectrique comporte un bloc de matériau piézoélectrique pris en sandwich totalement ou partiellement entre deux électrodes destinées, lorsqu'elles sont alimentées, à appliquer un champ électrique au matériau piézoélectrique. Ce champ électrique est utilisé pour commander une déformation mécanique du bloc de matériau piézoélectrique. Le bloc de matériau piézoélectrique peut être monocouche ou multicouche et s'étendre au-delà d'une électrode. De préférence, on choisit comme matériau piézoélectrique du PZT.

Le dispositif d'actionnement peut comprendre un unique actionneur sous la forme d'une couronne ou bien de plusieurs actionneurs distincts (par exemple sous forme de poutres) régulièrement répartis sur la circonférence de la membrane.

Eventuellement, les actionneurs peuvent être capables de fléchir dans deux sens opposés.

Le dispositif d'actionnement peut être agencé sur la face intérieure de la membrane, sur la face extérieure ou encore à l'intérieur de la membrane.

Eventuellement, le dispositif d'actionnement peut s'étendre en partie sur la zone d'ancrage périphérique.

Dans certains modes de réalisation, le fond est une paroi du support et est donc, contrairement à la membrane, sensiblement indéformable sous l'action d'un déplacement de fluide dans la cavité et de la variation de pression de fluide qui en résulte.

Dans d'autres modes de réalisation, le fond de la cavité comprend une deuxième membrane déformable, qui peut présenter des propriétés physiques, mécaniques et dimensionnelles identiques ou différentes de celle de la membrane évoquée plus haut. Dans ce cas, le fluide procure un couplage mécanique des deux membranes.

La figure 1 illustre un mode de réalisation d'un dispositif optique selon l'invention, en vue de dessus et en coupe.

Le dispositif optique 100 comprend un support 2 présentant une forme évidée définissant une cavité comprenant un fond 20 et une paroi latérale 21 s'étendant à partir du fond.

Le support peut éventuellement être constitué d'un empilement de couches, de sorte que le matériau de la paroi 21 n'est pas nécessairement le même que celui du fond 20.

Par exemple, le substrat 2 peut être en verre.

La membrane déformable 1 présente une zone périphérique 1c par laquelle elle est ancrée de manière étanche sur le support 2.

La membrane 1 définit ainsi, avec le fond 20 et la paroi 21, une cavité étanche remplie d'un volume constant d'un fluide 3.

Le dispositif 100 comprend en outre un dispositif d'actionnement 4 agencé dans la zone d'actionnement 1a de la membrane qui est située entre la zone d'ancrage 1c et la partie centrale 1b de la membrane.

Au repos, c'est-à-dire lorsqu'aucune tension électrique n'est appliquée au dispositif d'actionnement, la membrane 1 est supposée plane, comme illustré sur la figure 1. Néanmoins, cette illustration n'est pas limitative et la membrane peut présenter une configuration non plane au repos (par exemple pour former un dioptre convergent ou divergent) sans pour autant sortir du cadre de la présente invention.

La structure de rigidification 10 s'étend sur la surface de la partie centrale de la membrane, sous la forme d'un réseau de nervures perpendiculaires à la surface de la membrane.

Dans ce mode de réalisation, la structure de rigidification 10 est située sur la face extérieure de la membrane 1, c'est-à-dire du côté opposé au fluide 3. Il n'est cependant pas exclu de former cette structure de rigidification sur la face intérieure de la membrane, c'est-à-dire sur la face exposée au fluide.

Sur le mode de réalisation illustré sur la figure 1, les nervures forment un quadrillage et définissent une pluralité d'alvéoles de forme carrée délimitant chacune une région déformable 1d de la partie centrale de la membrane.

Les nervures peuvent présenter une hauteur et une épaisseur variable selon leur emplacement sur la partie centrale de la membrane.

Les alvéoles peuvent présenter toute autre forme qu'un carré, par exemple une forme circulaire, qui est une forme privilégiée pour une lentille.

La forme et les dimensions des alvéoles peuvent être identiques sur toute la surface de la partie centrale de la membrane ou au contraire varier selon leur emplacement sur ladite partie centrale.

Bien qu'elle soit représentée continue sur la figure 1, la structure de rigidification peut également être discontinue. Par exemple, la structure de rigidification peut comprendre des groupes de nervures délimitant chacun une alvéole respective sans que les nervures d'un groupe soient reliées aux nervures d'un groupe délimitant une alvéole adjacente.

La figure 2 est une vue en coupe du dispositif optique de la figure 1 en fonctionnement, dans une forme d'exécution où la structure de rigidification est indéformable sous l'effet d'une variation de la pression de fluide.

L'application d'une tension électrique d'actionnement au dispositif d'actionnement 4 provoque un fléchissement dudit dispositif d'actionnement vers le fluide 3.

Ce fléchissement a pour effet de forcer une partie du fluide situé entre la zone d'actionnement 1a et le fond 20 à s'écouler vers le centre de la cavité. Ce faisant, la pression de fluide exercée sur la partie centrale 1b de la membrane augmente.

La structure de rigidification étant indéformable, le fléchissement du dispositif d'actionnement 4 vers le fluide 3 déplace la région d'actionnement 1a de la membrane, qui entraîne la partie centrale 1b de la membrane en translation vers le fluide, parallèlement au trait en pointillés qui schématise la position de repos de la membrane.

En revanche, la portion de membrane 1d délimitée par chaque alvéole se déforme sous l'effet de la variation de la pression de fluide et adopte alors une courbure convergente.

Chaque système optique élémentaire voit donc sa focale modifiée tout en conservant la même orientation de son axe optique.

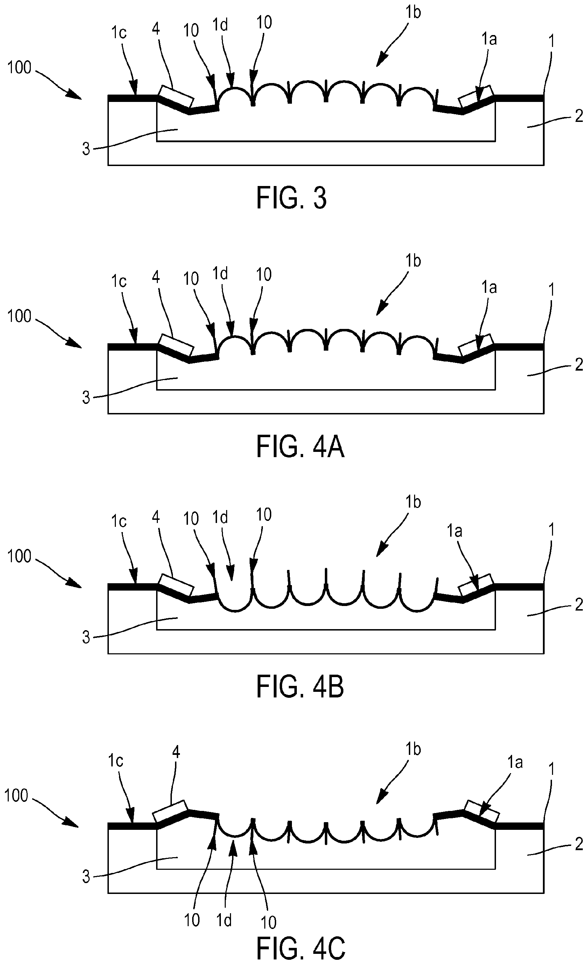

La figure 3 est une vue en coupe du dispositif optique de la figure 1 en fonctionnement, dans une forme d'exécution où la structure de rigidification se déforme sous l'effet d'une variation de la pression de fluide.

Dans ce cas, le fléchissement du dispositif d'actionnement 4 vers le fluide 3 déplace la région d'actionnement 1a de la membrane, et la structure de rigidification se déforme sous l'effet de la variation de la pression de fluide, en adoptant une courbure générale convergente.

En même temps, la portion de membrane 1d délimitée par chaque alvéole se déforme également sous l'effet de la variation de la pression de fluide et adopte alors une courbure convergente.

Chaque système optique élémentaire voit donc à la fois sa focale et l'orientation de son axe optique modifiées, la variation d'orientation de l'axe optique étant plus importante à la périphérie de la partie centrale de la membrane qu'à son centre.

Les configurations déformées illustrées sur les figures 2 et 3 ne sont que des exemples non limitatifs et il est possible d'envisager d'autres déformations de la membrane et de chaque portion de membrane délimitée par la structure de rigidification en fonction de l'amplitude et du sens de fléchissement du dispositif d'actionnement, ainsi que des propriétés mécaniques de la structure de rigidification et de chaque portion de membrane.

Par ailleurs, les modes de réalisation des figures 2 et 3 concernent des dispositifs optiques dont la membrane est plane au repos. L'invention couvre également des modes de réalisation dans lesquels la membrane présente toute autre forme au repos.

Les figures 4A à 4D sont ainsi des vues en coupe de différents modes de réalisation du dispositif optique selon l'invention au repos.

Sur la figure 4A, la structure de rigidification 10 présente une courbure convexe.

D'autre part, chaque portion de la membrane située à l'intérieur d'une alvéole présente également une courbure convexe.

Sur la figure 4B, la structure de rigidification 10 présente une courbure convexe.

D'autre part, chaque portion de la membrane située à l'intérieur d'une alvéole présente une courbure concave.

Sur la figure 4C, la structure de rigidification 10 présente une courbure concave.

D'autre part, chaque portion de la membrane située à l'intérieur d'une alvéole présente également une courbure concave.

Enfin, sur la figure 4D, la structure de rigidification 10 présente une courbure concave.

D'autre part, chaque portion de la membrane située à l'intérieur d'une alvéole présente une courbure convexe.

En adaptant la configuration de repos du dispositif, il est possible d'obtenir un réseau de lentilles ou de miroirs présentant au repos différentes orientations de leur axe optique et différentes focales.

La figure 5 illustre un autre mode de réalisation du dispositif optique selon l'invention, en vue de dessus et en coupe, qui diffère de celui de la figure 1 essentiellement par la forme de la structure de rigidification et le nombre de régions déformables délimitées par celle-ci. On utilise les mêmes signes de référence que sur la figure 1 pour désigner des éléments remplissant la même fonction que dans le dispositif illustré sur la figure 1.

La structure de rigidification 10 se présente sous la forme d'une couche s'étendant sur la surface de la partie centrale de la membrane 1. Ladite couche présente des ouvertures définissant des alvéoles qui délimitent chacune une région déformable 1d de la partie centrale de la membrane.

Dans l'exemple illustré sur la figure 5, les alvéoles sont rondes mais il va de soi que toute autre forme d'alvéole peut être utilisée. Par ailleurs, les alvéoles sont représentées au nombre de quatre mais il va de soi que tout autre nombre d'alvéoles au-delà de deux peut être utilisé.

Le fonctionnement du dispositif optique 100 est similaire à celui de la figure 1, qui a été décrit plus haut. Selon la raideur de la couche formant la structure de rigidification, ladite structure peut être ou non déformable sous l'effet d'une variation d'une pression de fluide et peut donc donner lieu à de multiples configurations des systèmes optiques élémentaires.

D'autre part, la figure 5 illustre une membrane et une structure de rigidification qui sont planes au repos mais il va de soi que l'invention couvre toute autre configuration de repos, par exemple, une courbure convergente ou divergente de la partie centrale de la membrane.

La structure de rigidification peut faire partie intégrante de la membrane et être réalisée au cours du même procédé de fabrication.

De manière alternative, la structure de rigidification peut être fabriquée séparément de la membrane puis rendue solidaire de celle-ci par tout moyen approprié, tel qu'un collage par exemple. Dans ce cas, la structure de rigidification peut être réalisée en un matériau différent de celui de la membrane.

La structure de rigidification peut être ou non capable de transmettre un faisceau lumineux incident.

Le dispositif optique peut être réalisé par des techniques de microélectronique bien connues de l'homme du métier, notamment des techniques de dépôt en couche mince de type dépôt chimique en phase vapeur, dépôt physique en phase vapeur, électrodéposition, épitaxie, oxydation thermique, évaporation, laminage de films. Par ailleurs, l'ancrage de la membrane sur le support peut impliquer des techniques de collage.

La membrane peut être réalisée à base de matériaux organiques tels que le polydiméthylsiloxane, le polymétacrylate de méthyle, le polyéthylène téréphtalate, le polycarbonate, le parylène, les résines époxydes, les polymères photosensibles, les silicones, ou de matériaux minéraux tels que le silicium, l'oxyde de silicium, le nitrure de silicium, le silicium polycristallin, le carbone diamant. La membrane peut être constituée d'une seule couche d'un même matériau ou d'un empilement de couches de matériaux différents.

La structure de rigidification peut être réalisée en l'un des polymères décrits ci-dessus, ou en un matériau minéral tel que l'oxyde de silicium, le nitrure de silicium ou encore le silicium polycristallin, Dans le cas où la structure de rigidification est en un matériau minéral, la contrainte induite par le matériau sur la zone centrale doit être ajustée pour ne pas être excessivement compressive (afin d'éviter tout flambage de la membrane) ni excessivement tensile pour éviter de pénaliser la déformation des portions de membrane). Avantageusement, on fait en sorte que la contrainte induite par la structure de rigidification sur la membrane soit légèrement tensile.

Le fluide peut être un liquide comme le carbonate de propylène, l'eau, un liquide d'indice, une huile optique ou un liquide ionique, une huile silicone, un liquide inerte à forte stabilité thermique et à faible pression de vapeur saturante.

Le fluide peut éventuellement être un gaz tel que l'air, l'azote ou l'hélium principalement pour un dispositif optique fonctionnant en réflexion.

Si le dispositif optique fonctionne en transmission, l'homme du métier choisira l'indice de réfraction du fluide en fonction des performances optiques souhaitées.

De manière particulièrement avantageuse, la fabrication du dispositif optique est basée sur le procédé décrit dans le document FR 2 962 557, dans lequel on réalise la membrane déformable et sa structure de rigidification et le dispositif d'actionnement sur un substrat de silicium.

Ce substrat est ensuite reporté sur un substrat de verre en encapsulant le fluide entre les deux substrats, le fluide étant préalablement dispensé sur l'un des substrats. Cette technique est classiquement utilisée dans la fabrication des écrans LCD. Avantageusement, une colle est utilisée pour coller les deux substrats et garantir la distance les séparant.

Enfin, on libère la membrane en gravant le substrat de silicium dans la partie centrale et dans la région d'actionnement.

Dans les modes de réalisation décrits plus haut, le fond de la cavité est considéré comme une paroi du support, c'est-à-dire une paroi sensiblement indéformable sous l'action d'un déplacement de fluide dans la cavité et de la variation de pression de fluide qui en résulte.

Cependant, l'invention couvre également un dispositif optique dans lequel le fond de la cavité comprend une membrane déformable additionnelle dont une zone d'ancrage périphérique est liée au support. Dans ce cas, le fluide exerce un couplage mécanique des deux membranes, qui permet de moduler les déformations adoptées par la partie centrale des deux membranes.

La membrane déformable peut elle-même être couplée on non à un dispositif d'actionnement.

### Applications du dispositif optique

Le dispositif optique décrit ci-dessus trouve application dans de nombreux domaines de l'optique et de la photonique. Parmi les exemples d'applications, on peut citer les yeux artificiels, les caméras (par exemple les optiques plenoptiques Lytro ou Pelican Imaging), les systèmes optiques d'imagerie 3D (capture ou projection d'images), ou encore les télécommunications ou l'éclairage (liste non limitative).

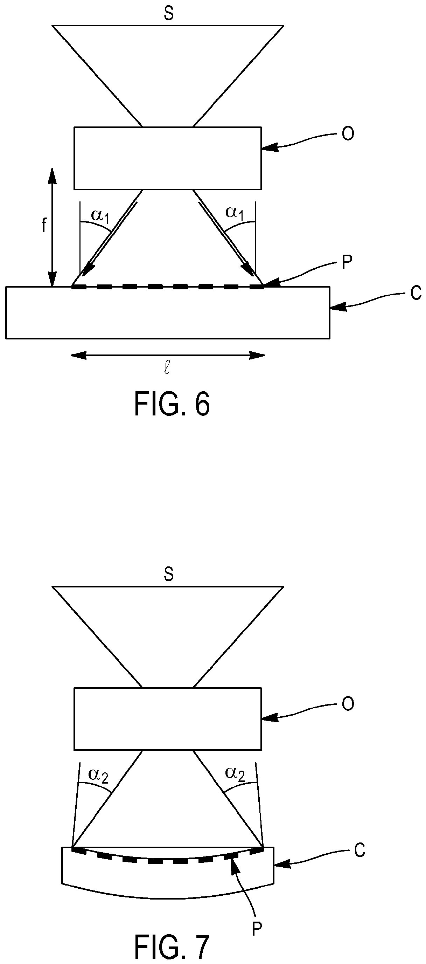

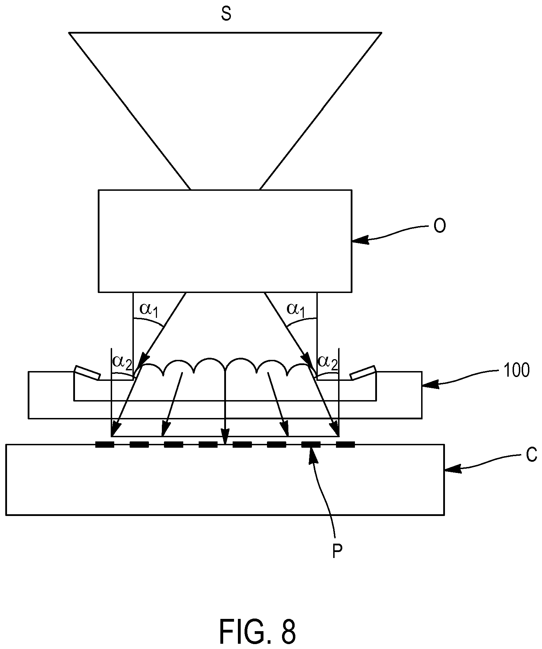

La figure 8 illustre une application particulière dans laquelle le dispositif optique selon l'invention est associé à un capteur d'images dans une caméra miniature ; les figures 6 et 7 illustrent des solutions connues pour une telle application.

La figure 6 illustre un capteur d'images C destiné à prendre des vues (photographies ou films) d'une scène S. Un dispositif optique O comprenant une pluralité de lentilles à focale fixe est agencé sur le trajet optique entre la scène S et le plan pixels P du capteur C, de sorte que la distance entre le dispositif optique O et le plan pixels P soit égal à la distance focale f du dispositif optique O. Le dispositif optique produit donc une image de la scène S dans le plan pixels P.

Au fil des évolutions technologiques, la distance focale des dispositifs optiques tend à diminuer et la résolution des capteurs tend à augmenter (notamment dans le domaine de la téléphonie mobile) ; la taille du plan pixels (référencée I sur la figure 6) augmente donc en conséquence, de sorte que l'angle d'incidence α₁ sur les bords du plan pixels augmente. Ce phénomène dégrade la quantité de photon collectée par les pixels. Pour remédier à cet inconvénient, il est souhaitable de diminuer l'angle d'incidence sur les bords du plan pixel.

La figure 7 illustre une solution connue pour diminuer l'angle d'incidence sur les bords du plan pixels. Elle consiste à courber le capteur d'images C et notamment le plan pixels P. Ainsi, l'angle d'incidence α₂ sur les bords du plan pixels est inférieur à l'angle α₁ de la figure 6.

Le dispositif selon l'invention procure une autre solution pour diminuer l'angle d'incidence sur les bords du plan pixels. Comme illustré sur la figure 8, un dispositif 100 selon le mode de réalisation de la figure 3 (c'est-à-dire dont la structure de rigidification se déforme sous l'effet d'une variation de la pression de fluide) comprenant une pluralité de lentilles élémentaires à focale variable est agencé entre le dispositif optique O et le plan pixels P du capteur d'images C.

Le fait que la membrane et la structure de rigidification se déforment permet de rabattre les faisceaux incidents et ainsi de diminuer l'angle α₂ sur les bords du plan pixels.

Le réseau de systèmes optiques élémentaires du dispositif 100 permet de plus ou moins concentrer les faisceaux incidents sur les pixels et éventuellement de plus ou moins dévier le faisceau incident.

Ainsi, contrairement à un dispositif multi-lentilles à focale fixe, le dispositif selon l'invention permet d'adapter la focalisation des faisceaux incidents sur les pixels en fonction de leur emplacement sur le capteur. Ledit dispositif présente également une structure évolutive en fonction de la déformation de la membrane et de la structure de rigidification.

### REFERENCES

[1] L. Miccio et al, Tunable liquid microlens arrays in electrode-less configuration and their accurate characterization by interference microscopy, Optics Express, Vol. 17, N°4, 2009
[2] N. Chronis et al, Tunable liquid-filled microlens array integrated with fluidic network, Optics Express, Vol. 11, N°19, 2003

## Revendications

1. Dispositif optique (100) à focale variable comprenant :
une membrane (1) déformable,
un support (2) auquel une zone d'ancrage périphérique (1c) de ladite membrane (1) est liée,
une cavité remplie d'un volume constant d'un fluide (3), ladite cavité étant délimitée par la membrane (1), un fond (20) opposé à la membrane (1) et une paroi (21) du support (2) s'étendant entre le fond (20) et la membrane (1),
un dispositif (4) d'actionnement d'une région (1a) de la membrane (1) située entre la zone d'ancrage périphérique (1c) et une partie centrale (1b) de la membrane (1), configuré pour fléchir ladite membrane par application d'une tension électrique d'actionnement de sorte à déplacer une partie du volume de fluide (3),
**caractérisé en ce que** le dispositif optique comprend en outre une structure de rigidification (10) comprenant soit des nervures s'étendant perpendiculairement à la surface de la partie centrale de la membrane, soit une couche s'étendant sur la partie centrale de la membrane (1), ladite couche présentant au moins deux ouvertures,
ces nervures ou ouvertures définissant des alvéoles séparées qui délimitent, dans la partie centrale (1b) de ladite membrane, au moins deux régions déformables séparées (1d) de ladite membrane constituant chacune un dioptre respectif d'un système optique élémentaire respectif, chaque système optique élémentaire comprenant ladite région déformable (1d) respective de la membrane, le fluide (3) et le fond (20) de la cavité.

2. Dispositif selon la revendication 1, **caractérisé en ce que** lesdites alvéoles présentent une forme circulaire.

3. Dispositif selon l'une des revendications 1 à 2 **caractérisé en ce que** la structure de rigidification (10) fait partie intégrante de la membrane (1).

4. Dispositif selon l'une des revendications précédentes, **caractérisé en ce que** la structure de rigidification (10) est liée à la membrane (1).

5. Dispositif selon l'une des revendications précédentes, **caractérisé en ce que** la raideur des régions déformables (1d) de la membrane (1) est constante d'une région à l'autre.

6. Dispositif selon l'une des revendications 1 à 4, **caractérisé en ce que** la membrane (1) comprend au moins deux régions déformables (1d) présentant des raideurs différentes.

7. Dispositif selon l'une des revendications précédentes, **caractérisé en ce que** la structure de rigidification (10) est indéformable sous l'effet d'une variation de la pression de fluide exercée sur la partie centrale (1b) de la membrane, de sorte que lorsque le dispositif d'actionnement (4) est activé la partie centrale (1b) de la membrane se déplace sans se déformer, seules les régions déformables (1d) délimitées par la structure de rigidification (10) étant susceptibles de se déformer.

8. Dispositif selon l'une des revendications 1 à 6, **caractérisé en ce que** la structure de rigidification (10) est apte à se déformer sous l'effet d'une variation de la pression de fluide exercée sur la partie centrale (1b) de la membrane.

9. Dispositif selon l'une des revendications précédentes, **caractérisé en ce que** le fond de la cavité est une paroi du support.

10. Dispositif selon l'une des revendications 1 à 8, **caractérisé en ce que** le fond de la cavité comprend une membrane déformable additionnelle présentant une zone d'ancrage périphérique liée audit support.

11. Procédé de variation de la focale d'un dispositif selon l'une des revendications précédentes, comprenant l'application d'une tension électrique d'actionnement au dispositif d'actionnement (4) et la déformation de la membrane dans chaque région déformable (1d) délimitée par une alvéole de la structure de rigidification.

## Patentansprüche

1. Optische Vorrichtung (100) mit variabler Brennweite, die Folgendes umfasst:
- eine verformbare Membran (1),
- einen Träger (2), mit dem ein peripherer Verankerungsbereich (1c) der Membran (1) verbunden ist,
- einen mit einem konstanten Flüssigkeitsvolumen (3) gefüllten Hohlraum, der durch die Membran (1), eine der Membran (1) gegenüberliegende Basis (20) und eine sich zwischen der Basis (20) und der Membran (1) erstreckende Wand (21) des Trägers (2) begrenzt ist,
- eine Betätigungsvorrichtung (4) eines Bereichs (1a) der Membran (1), der sich zwischen dem peripheren Verankerungsbereich (1c) und einem zentralen Teil (1b) der Membran (1) befindet, die so konfiguriert ist, dass sie die Membran durch Anlegen einer elektrischen Betätigungsspannung so verschiebt, dass ein Teil des Fluidvolumens (3) verdrängt wird, und
**dadurch gekennzeichnet, dass** die optische Vorrichtung außerdem eine Versteifungsstruktur (10) umfasst, die entweder Rippen, die sich senkrecht zur Oberfläche des Mittelteils der Membran erstrecken, oder eine Schicht, die sich auf dem Mittelteil der Membran erstreckt, umfasst, wobei die Schicht mindestens zwei Öffnungen aufweist, wobei die Rippen oder Öffnungen getrennte Zellen definieren, die in dem zentralen Teil (1b) der Membran mindestens zwei getrennte verformbare Bereiche (1d) der Membran begrenzen, die jeweils eine entsprechende Dioptrie eines entsprechenden elementaren optischen Systems bilden, wobei jedes elementare optische System den entsprechenden verformbaren Bereich (1d) der Membran, das Fluid (3) und die Basis (20) des Hohlraums umfasst.

2. Vorrichtung nach Anspruch 1, **dadurch gekennzeichnet, dass** die Zellen eine kreisförmige Form aufweisen.

3. Vorrichtung nach einem der Ansprüche 1 bis 2, **dadurch gekennzeichnet, dass** die Versteifungsstruktur (10) einen integralen Bestandteil der Membran (1) bildet.

4. Vorrichtung nach einem der vorstehenden Ansprüche, **dadurch gekennzeichnet, dass** die Versteifungsstruktur (10) mit der Membran (1) verbunden ist.

5. Vorrichtung nach einem der vorstehenden Ansprüche, **dadurch gekennzeichnet, dass** die Steifigkeit der verformbaren Bereiche (1d) der Membran (1) von einem Bereich zum anderen konstant ist.

6. Vorrichtung nach einem der Ansprüche 1 bis 4, **dadurch gekennzeichnet, dass** die Membran (1) mindestens zwei verformbare Bereiche (1d) mit unterschiedlichen Steifigkeitsgraden aufweist.

7. Vorrichtung nach einem der vorstehenden Ansprüche, **dadurch gekennzeichnet, dass** die Versteifungsstruktur (10) unter der Wirkung der Veränderung des auf den zentralen Teil (1b) der Membran ausgeübten Fluiddrucks nicht verformbar ist, so dass sich bei der Aktivierung der Betätigungsvorrichtung (4) der zentrale Teil (1b) der Membran ohne Verformung verschiebt, wobei nur die durch die Versteifungsstruktur (10) begrenzten verformbaren Bereiche (1d) verformt werden können.

8. Vorrichtung nach einem der Ansprüche 1 bis 6, **dadurch gekennzeichnet, dass** sich die Versteifungsstruktur (10) unter der Wirkung der Veränderung des auf den zentralen Teil (1b) der Membran ausgeübten Fluiddrucks verformen kann.

9. Vorrichtung nach einem der vorstehenden Ansprüche, **dadurch gekennzeichnet, dass** der Boden des Hohlraums eine Wand des Trägers ist.

10. Vorrichtung nach einem der Ansprüche 1 bis 8, **dadurch gekennzeichnet, dass** der Boden des Hohlraums eine zusätzliche verformbare Membran mit einem peripheren Verankerungsbereich umfasst, der mit dem genannten Träger verbunden ist.

11. Verfahren zur Veränderung der Brennweite einer Vorrichtung nach einem der vorstehenden Ansprüche, umfassend das Anlegen einer elektrischen Betätigungsspannung an die Betätigungsvorrichtung (4) und die Verformung der Membran in jedem verformbaren Bereich (1d), der durch eine Zelle der Versteifungsstruktur begrenzt ist.

## Claims

1. An optical device (100) with variable focal length comprising:
- a deformable membrane (1),
- a support (2) to which a peripheral anchoring area (1c) of said membrane (1) is connected,
- a cavity filled with a constant volume of fluid (3), said cavity being delimited by the membrane (1), a base (20) opposite the membrane (1) and a wall (21) of the support (2) extending between the base (20) and the membrane (1),
- an actuation device (4) of a region (1a) of the membrane (1) located between the peripheral anchoring area (1c) and a central part (1b) of the membrane (1), configured to shift said membrane by application of electrical actuation voltage so as to displace some of the volume of fluid (3), and
**characterized in that** the optical device further comprises a stiffening structure (10) comprising either ribs extending perpendicularly to the surface of the central part of the membrane or a layer extending on the central part of the membrane, said layer having at least two openings, said ribs or openings define separate cells which delimit, in the central part (1b) of said membrane, at least two separate deformable regions (1d) of said membrane each constituting a respective dioptre of a respective elementary optical system, each elementary optical system comprising said respective deformable region (1d) of the membrane, the fluid (3) and the base (20) of the cavity.

2. The device according to claim 1, **characterized in that** said cells present a circular form.

3. The device according to one of claims 1 to 2, **characterized in that** the stiffening structure (10) forms an integral part of the membrane (1).

4. The device according to one of the preceding claims, **characterized in that** the stiffening structure (10) is connected to the membrane (1).

5. The device according to one of the preceding claims, **characterized in that** the stiffness of the deformable regions (1d) of the membrane (1) is constant from one region to the other.

6. The device according to one of claims 1 to 4, **characterized in that** the membrane (1) comprises at least two deformable regions (1d) having different degrees of stiffness.

7. The device according to one of the preceding claims, **characterized in that** the stiffening structure (10) is undeformable under the effect of variation in fluid pressure exerted on the central part (1b) of the membrane, so that when the actuation device (4) is activated, the central part (1b) of the membrane shifts without deforming, only the deformable regions (1d) delimited by the stiffening structure (10) being likely to deform.

8. The device according to one of claims 1 to 6, **characterized in that** the stiffening structure (10) is capable of deforming under the effect of variation in fluid pressure exerted on the central part (1b) of the membrane.

9. The device according to one of the preceding claims, **characterized in that** the base of the cavity is a wall of the support.

10. The device according to one of claims 1 to 8, **characterized in that** the base of the cavity comprises an additional deformable membrane having a peripheral anchoring area connected to said support.

11. A method for variation in focal length of a device according to one of the preceding claims, comprising application of electrical actuation voltage to the actuation device (4) and deformation of the membrane in each deformable region (id) delimited by a cell of the stiffening structure.
